# EUROPEAN PATENT APPLICATION

(11) **EP 3 312 960 A1**
(43) Date of publication of application: **25.04.2018**
(21) Application number: 15895685.4
(22) Date of filing: 14.10.2015
(51) Int. Cl.: H02H 3/05, H02H 3/02

(54) **DIGITAL PROTECTION CONTROL DEVICE**

(30) Priority: 16.06.2015 JP 2015121050
(71) Applicant: Kabushiki Kaisha Toshiba, Minato-ku Tokyo 105-8001 (JP); Toshiba Energy Systems & Solutions Corporation, Saiwai-ku Kawasaki-shi Kanagawa 2120013 (JP)
(72) Inventor: SAKASHITA, Hironori, Tokyo 105-8001 (JP); UEMURA, Haruka, Tokyo 105-8001 (JP); ISHIMATSU, Takeshi, Fuchu-shi Tokyo 183-8511 (JP)
(74) Representative: Awapatent AB
(86) International application number: PCT/JP2015/079084
(87) International publication number: WO 2016/203666

(57) **Abstract**

An analog-digital converting unit 1 converts the electrical quantity obtained from a power system into a digital amount. A non-volatile memory 23 stores a protective control program 230 that achieves the function of a digital protective control device 100. A processor 21 executes the protective control program 230 to perform arithmetic processing on the digital amount output by the analog-digital converting unit. The protective control program 230 includes a basic program 231 and an added program 232 divided in accordance with the function of the digital protective control device 100. The added program 232 includes valid operation period information 234. The processor 21 executes the added program 232 within the valid operation period.

## Description

### FIELD

Embodiments of the present disclosure relate to a digital protective control device applied for digital protective control on a power system, etc.

### BACKGROUND

Digital protective control devices have different hardware configuration, function, and program that realizes a digital protective control function, etc. depending on the configuration of power system that is a protective control target. Manufacturers of the digital protective control device carry out tests with the hardware configuration and the program being a pair, and assures the quality of the device for users.

### CITATION LIST

### PATENT LITERATURES

Patent Document 1: JP 2002-218642 A

### SUMMARY

When a power system structure, etc., is changed, in accordance with a request from the user, a function may be partially added to or changed from the existing digital protective control device that has the assured quality. In order to do so, a work of changing the existing program is required. A test on the digital protective control device with the changed program is necessary after the work. Even in cases of partially adding or changing the function, the test for the entire functions of the digital protective control device is necessary.

In addition, upon a tentative utilization of the changed program by the user, a practical adaptation may be shelved in some cases. In such cases it is necessary to restore the changed program, and to carry out a test to check whether the digital protective control device operates normally with the restored program or not.

Hence, disadvantages, such as a test period and costs, are involved in both time of changing the program and restoring the program.

In addition, the protective control function that is the original function of the digital protective control device cannot be achieved during the changing work and the restoration work. Hence, actions, such as suspending the power system that is a segment subjected to the protective control by the digital protective control device, etc. is necessary, and there are also disadvantages from the suspended operation of the power system in addition to the work costs.

Still further, when a certain period for the user to tentatively utilize the changed program is set, the added function keeps working until the restoration work is carried out even after a determination of shelving the adaptation of the change program is made. Hence, there is a possibility that the locus of responsibility becomes an issue when the function causes a technical problem after the test period. In addition, there is also a disadvantage that a user may conduct fraudulent utilization, which does not involve an adequate compensation for the manufacturer of the program.

Embodiments of the present disclosure have been made in view of the foregoing disadvantages, and an objective is to provide a digital protective control device which has high convenience and reliability, which is capable of reducing a test period and costs when a function is partially changed and when the function is restored, and which is capable of reducing a time period of suspending a protective control function by promptly restoring a program after the test period to prevent a fraudulent utilization by a user.

A digital protective control device according to an embodiment protects a power system, and the digital protective control device includes:
an analog-digital converting unit that converts an electrical quantity obtained from the power system into digital data;
a memory unit that stores a protective control program which achieves a function of the digital protective control device; and
a processor that executes the protective control program stored in the memory unit, and performs arithmetic processing on the digital data output by the analog-digital converting unit.
The protective control program includes a plurality of divided programs divided in accordance with the function of the digital protective control device, and each of the divided programs includes information related to a valid operation period thereof.
The processor executes the divided program within the valid operation period.

### BRIEF DESCRIPTION OF DRAWINGS

FIG. 1 is a block diagram illustrating a structure of a digital protective control device according to a first embodiment;
FIG. 2 is a block diagram illustrating a structure of an arithmetic processing unit;
FIG. 3 is a flowchart illustrating an operation of the digital protective control device when executing an added program;
FIG. 4 is a block diagram illustrating a structure of an arithmetic processing unit of a digital protective control device according to a second embodiment;
FIG. 5 is a flowchart illustrating an operation of the digital protective control device when executing an added program;
FIG. 6 is a block diagram illustrating a structure of an arithmetic processing unit of a digital protective control device according to a third embodiment;
FIG. 7 is a flowchart illustrating an operation of the digital protective control device when executing an added program;
FIG. 8 is a block diagram illustrating a structure of an arithmetic processing unit of a digital protective control device according to a fourth embodiment;
FIG. 9 is a flowchart illustrating an operation of the digital protective control device when executing an added program; and
FIG. 10 is a block diagram illustrating a structure of a digital protective control device according to a fifth embodiment.

### DETAILED DESCRIPTION

Digital protective control device according to embodiments will be described with reference to figures.

### [First Embodiment]

### [Structure]

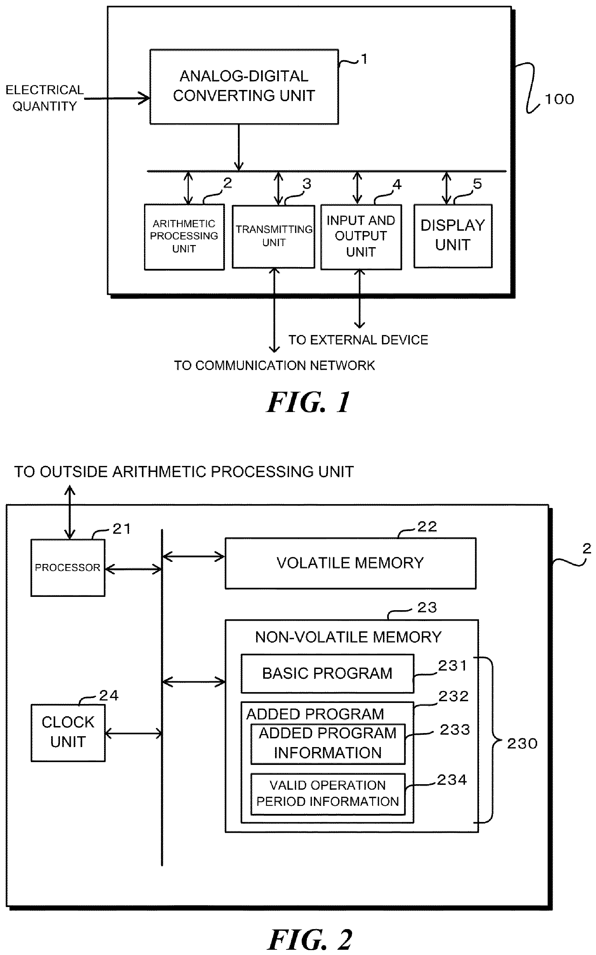

FIG. 1 illustrates a structure of a digital protective control device 100 according to a first embodiment. The digital protective control device 100 includes an analog-digital converting unit 1, an arithmetic processing unit 2, a transmitting unit 3, an input-output unit 4, and a display unit 5.

The electrical quantity, that is, the voltage or current of a power system from an external device is input to the analog-digital converting unit 1. The analog-digital converting unit 1 performs analog-digital conversion of sampling the analog input value at a predetermined cycle, and converting the analog input value into a quantized digital amount.

The arithmetic processing unit 2 performs arithmetic processing related to a digital protective control function using the digital amount converted by the analog-digital converting unit 1. The details of the arithmetic processing unit 2 will be described later.

The transmitting unit 3 transmits data to and receive data from an external device such as a remote monitoring control device via a communication network. The input-output unit 4 inputs and outputs switch information with the external device by a contact. The display unit 5 includes an LCD and LEDs, and displays information of the status of the digital protective control device 100 and information stored in the digital protective control device 100. The analog-digital converting unit 1, the arithmetic processing unit 2, the transmitting unit 3, the input-output unit 4, and the display unit 5 are connected with each other via a bus, and are capable of transmitting and receiving data with each other.

FIG. 2 illustrates a structure of the arithmetic processing unit 2. The arithmetic processing unit 2 includes a processor 21, a non-volatile memory 23 that is a memory unit, a volatile memory 22, and a clock unit 24. The clock unit 24 may be a timer, etc., that measures day and time. The arithmetic processing unit 2, the non-volatile memory 23, and the volatile memory 22 are connected with each other via a bus, and are capable of transmitting and receiving data with each other.

The processor 21 is a processor such as a CPU, etc. The non-volatile memory 23 is capable of holding data contents even when a main power supply is shut down, and for example, an EEPROM is applicable. The volatile memory 22 is, for example, a DRAM, an SRAM, etc., that have fast reading and writing speed.

The non-volatile memory 23 that is the memory unit stores a protective control program 230. The protective control program 230 is a program necessary for the operation of the digital protective control device 100. The processor 21 copies the protective control program 230 stored in the non-volatile memory 23 into the volatile memory 22, and reads the copied protective control program 230 in the volatile memory 22 to achiev the functions of the digital protective control device 100. For example, the processor 21 performs arithmetic processing on the digital amount output by the analog-digital converting unit 1 in accordance with the protective control program 230.

The protective control program 230 is constructed by a plurality of divided programs divided in accordance with the function to be achieved by the digital protective control device 100. Here, a description will be given to an example case in which, as the divided programs, a basic program 231 which the operation of the digital protective control device 100 at the time of activation is written, and an added program 232 which the operation to achieve the added function after the activation of the device is written are stored.

The basic program 231 includes a program module set to activate the digital protective control device 100, and configuration information of the hardware and function corresponding to the basic program 231, etc.

The added program 232 may be created in accordance with the function, such as a communication function or an arithmetic processing function, executed after the digital protective control device 100 is activated. In FIG. 2, although one added program 232 is illustrated, the number of the added programs 232 may be equal to or greater than two. In addition, in the state in which no added function is implemented, there may be no added program 232 and only the basic program 231 may be stored. When a change is made to the function already implemented by the digital protective control device 100, the basic program 231 or the added program 232 already stored is re-written. When a new function is added to the digital protective control device 100, a new added program 232 is written.

The added program 232 includes added program information 233 and valid operation period information 234. The added program information 233 includes a program module to achieve the added function, configuration information of the hardware and function corresponding to the added program 232, and identification information for identifying the added program 232 itself from the other programs, etc.

The valid operation period information 234 indicates the period which the operation of the added program 232 is valid, that is, the period which the added program 232 is operable on the digital protective control device 100. The valid operation period may be a time period with a certain length, and may be a specific time period on the calendar. Alternatively, the valid operation period is not limited to the time period on the calendar, and for example, may be a certain operation time of the added program 232. In this embodiment, the case in which the valid operation period is a specific time period on the calendar will be described. In this case, the valid operation period information 234 may include information of the start date and time of the valid operation period and the end date and time thereof. The start date and time and the end date and time may be information that does not include time details, such as year, month, day, hour, minute, and second, and may be information simply including date only.

As for the added program 232 without a limit to the valid operation period, the valid operation period information 234 may be omitted.

As described above, the processor 21 achieves the protective control function by executing the protective control program 230 that includes the basic program 231 and the added program 232, but the processor 21 does not execute the added program 232 that has the expired valid operation period. Hence, the processor 21 compares the valid operation period information 234 in the added program 232 with the present date and hour measured by the clock unit 24, and determines whether the valid operation period of the added program 232 has elapsed or not. The added program 232 that has the expired valid operation period is not executed. Since these operations are performed after the activation of the digital protective control device 100, those operations are written in the basic program 231.

### [Operation]

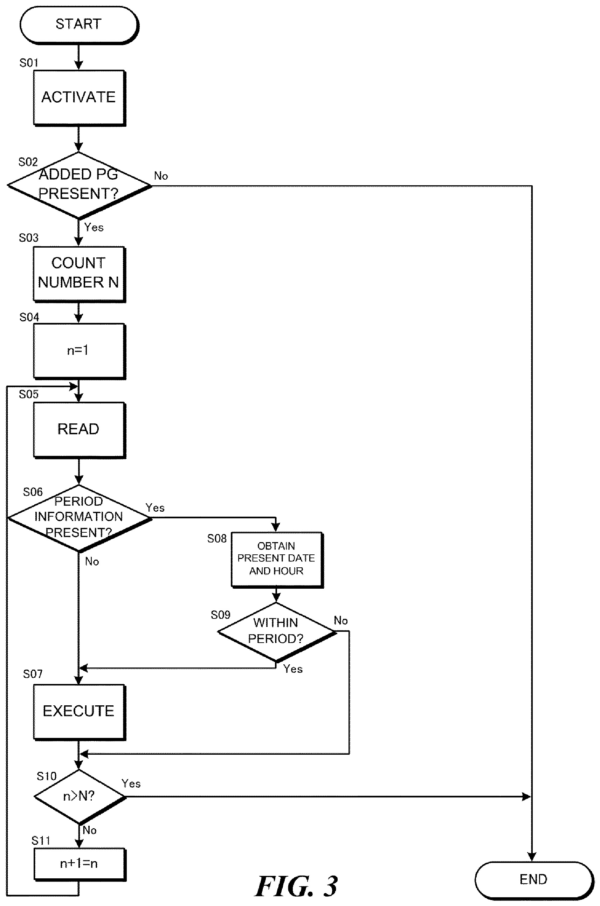

An operation of the digital protective control device 100 according to the first embodiment will be described with reference to FIG. 3. The processor 21 copies the basic program 231 stored in the non-volatile memory 23 into the volatile memory 22, and executes the basic program 231 in the volatile memory 22, to activate the digital protective control device 100 (step S01).

The processor 21 that is operating in accordance with the basic program 231 checks whether there is the added program 232 in the non-volatile memory 23 (step S02). When there is no added program 232 (step S02: NO), the process is terminated. When there is the added program 232 (step S02: YES), the number N of the added programs 232 is counted (step S03).

The processor 21 initializes with n = 1 (step S04), reads the n-th added program 232 (step S05), and checks whether there is the valid operation period information 234 or not (step S06). When there is no valid operation period information 234 (step S06: NO), the added program 232 is executed (step S07).

when there is the valid operation period information 234 (step S06: YES), the processor 21 refers to the clock unit 24 and obtains the present date and hour (step S08), and compares the obtained date and time with the valid operation period (step S09).

When the present date and time is within the valid operation period, that is, when the present date and time is after the start date and time in the valid operation period information 234 and is before the end date and time (step S09: YES), the processor 21 executes the added program 232 (step S07).

When execution of all the added programs 232 is not completed yet, that is, when n ≤ N (step S10 : NO), the processor 21 performs incrementation process that is n + 1 (step S11), and returns to the step S05, and reads the next added program 232.

In the step S09, when the present date and time is out of the valid operation period, that is, when the present date and time is before the start date and time in the valid operation period information 234 or after the end date and time in the valid operation period information 234 (step S09: NO), the processor 21 proceeds the process to step S10 without executing this added program 232.

In the step S10, when it becomes n = N and the execution of all the added programs 232 is completed (step S10: YES), the process is terminated.

### [Action and Effect]

(1) The digital protective control device 100 according to the first embodiment includes the analog-digital converting unit 1, the non-volatile memory 23 as the memory unit, and the processor 21. The analog-digital converting unit 1 converts the electrical quantity obtained from the power system into the digital amount. The non-volatile memory 23 stores the protective control program 230 that achieves the function of the digital protective control device 100. The processor 21 executes the protective control program 230 to perform arithmetic processing on the digital amount output by the analog-digital converting unit 1. The protective control program 230 includes the plurality of the divided programs divided in accordance with the function of the digital protective control device 100, and for example the divided programs are the basic program 231 and the added program 232. The added program 232 includes the valid operation period information 234. The processor 21 executes the added program 232 within the valid operation period.

By dividing the protective control program 230 in accordance with the function, when a change is made to the existing function, what is necessary is to simply re-write the basic program 231 or the added program 232 to achieve such functions, and when a new function is added, what is necessary is to simply write the new added program 232. Hence, it is unnecessary to rewrite the entire protective control program 230, and the time of the changing work can be reduced. In addition, as for the test after the program change, the test may be carried out for only the changed function. Accordingly, the highly convenient digital protective control device 100 can be provided.

In addition, since the added program 232 that is the divided program includes the valid operation period information 234, the processor 21 can determine whether the added program 232 is operable or not. When, for example, the formal adaptation of the added program 232 is shelved, the operation of the digital protective control device 100 can be restored to the original operation without a work of deleting the added program 232. Costs and time required for the restoration work and the subsequent test can be reduced. The time period which the protective control function is suspended by the restoration work can be reduced. Consequently, the cost-saving digital protective control device 100 can be provided.

It becomes possible for the digital protective control device to prevent the user from using the added program 232 at the time out of the valid operation period, and making the locus of responsibility unclear. The digital protective control device can also prevent the fraudulent utilization of the user who has no adequate payment to the program manufacturer. Hence, the highly reliable digital protective control device 100 can be provided.

More specifically, the digital protective control device 100 further includes the clock unit 24 that counts the date and time. The information on the valid operation period of the added program 232 may contain the start date and time of the valid operation period of the added program 232, or the end date and time thereof. The processor 21 compares the start date and time or the end date and time with the date and time measured by the clock unit 24, and when the measured date and time is before the start date and time or after the end date and time, the added program 232 is not executed. This surely prevents a utilization of the added program 232 at the time out of the valid operation period.

### [Second Embodiment]

### [Structure]

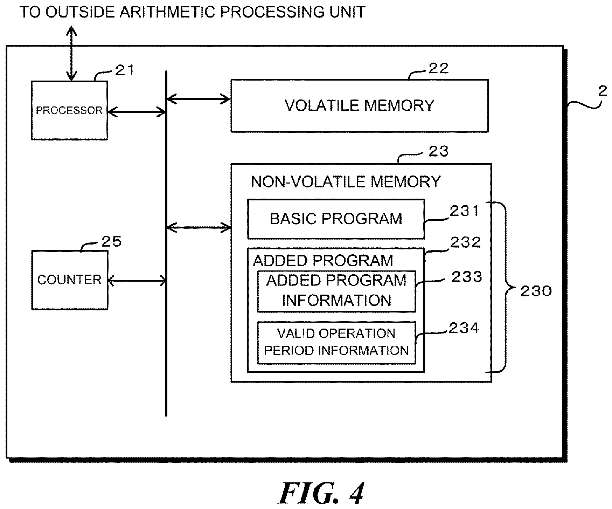

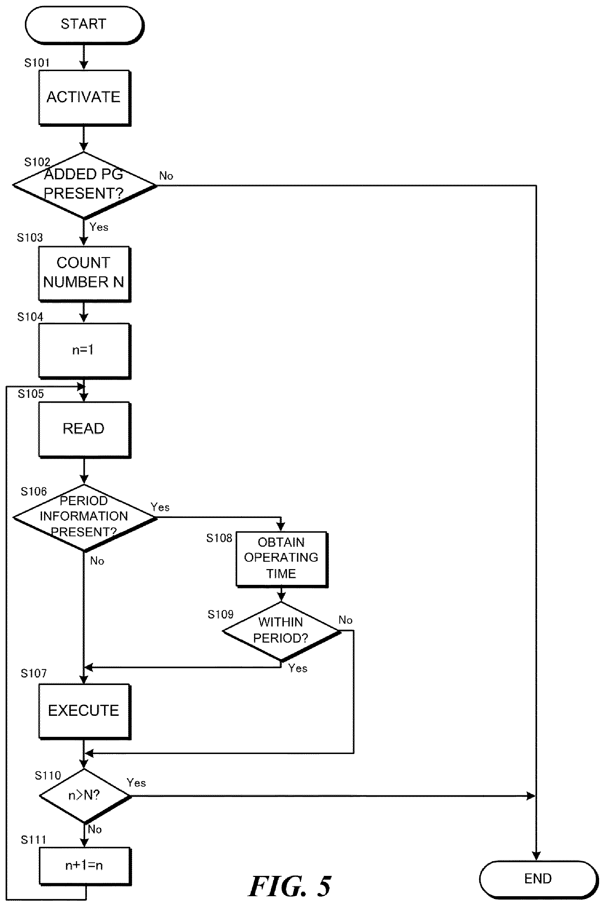

A digital protective control device 100 according to a second embodiment will be described with reference to FIGS. 4 and 5. In the following embodiments, only the different from the above embodiment will be described, the same component as that of the above embodiment will be denoted by the same reference numeral, and the detailed description thereof will be omitted.

As illustrated in FIG. 4, in the second embodiment, the arithmetic processing unit 2 includes a counter 25 that counts the operating time of the protective control program 230 instead of the clock unit 24 that measures the date and time. The counter 25 may be a counter capable of counting the operating times of each of the added programs 232 when the protective control program 230 includes the plurality of the added programs 232.

When the digital protective control device 100 includes the counter, the valid operation period of the added program 232 may be set as the certain operating time of the added program 232. The certain operating time means, for example, a time elasped until a certain time after the added program 232 installed in the digital protective control device 100 initially starts the operation. In this case, the valid operation period information 234 of the added program 232 may contain information of the total time which the added program 232 is operable. The total time may be, for example, three days, a week, or a month, etc.

When the new added program 232 is stored in the memory unit and initially executed, the processor 21 causes the counter 25 to start counting the operating time of this added program 232. The processor 21 compares the operating time of the added program 232 obtained from the counter 25 with the total time contained in the valid operation period information 234, and determines whether the valid operation period of the added program 232 has expired or not.

### [Operation]

The operation of the digital protective control device 100 according to the second embodiment will be described with reference to the flowchart of FIG. 5. Since operations in the steps S101 to S107, and S110 to S111 illustrated in the flowchart that is FIG. 5 are the same operations in the steps S01 to S07, and S10 to S11 illustrated in the flowchart that is FIG. 3, the description will be omitted.

In step S16, when the added program 232 contains the valid operation period information 234 (step S106: YES), the processor 21 refers to the counter 25, obtains the operating time of the added program 232 (step S108), and compares with the valid operation period (step S109).

When the operating time of the added program 232 is within the valid operation period, that is, when the operating time is not exceeding the operable total time (step S109: YES), the processor 21 executes the added program 232 (step S107) . When the operating time of the added program 232 is out of the valid operation period (step S109: NO), the processor 21 does not execute the added program 232, and proceeds the process to step S110.

### [Action and Effect]

In the second embodiment, the digital protective control device 100 further includes the counter 25 that counts the operating time of the protective control program 230. The information of the valid operation period of the added program 232 may include the information of the total time which the added program 232 is operable. The processor 21 compares the total time with the operating time of the added program 232 counted by the counter 25, and does not execute the added program 232 when the operating time exceeds the total time. Hence, utilization of the added program 232 out of the valid operation period is surely prevented, and the similar effect to that of the first embodiment can be achieved.

### [Third Embodiment]

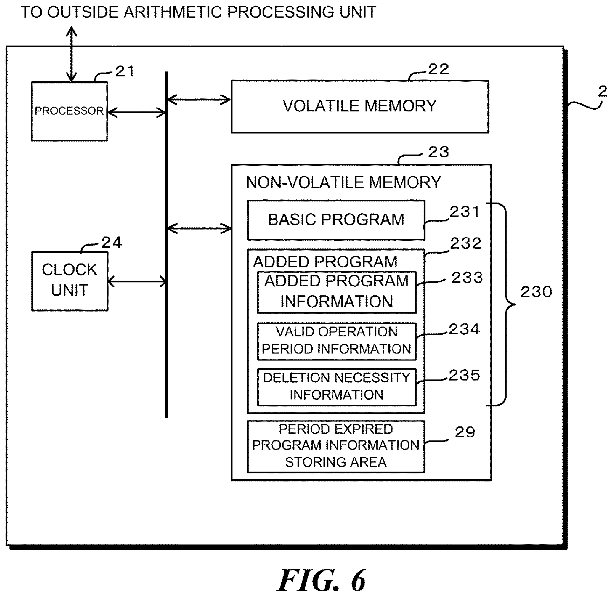

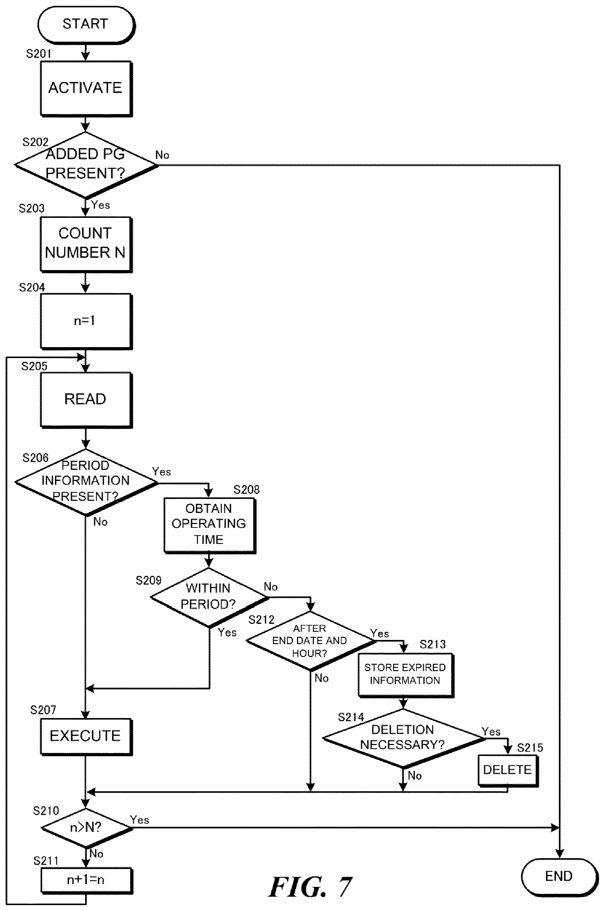

A digital protective control device 100 according to a third embodiment will be described with reference to FIGS. 6 and 7. Although the third embodiment employs the same structure as that of the first embodiment, as illustrated in FIG. 6, the non-volatile memory 23 of the arithmetic processing unit 2 is provided with a period expired program information storing area 29.

The period expired program information storing area 29 stores information related to the added program 232 which has the expired valid operation period. The information related to the added program 232 may contain, for example, identification information for identifying the added program 232 itself from the other program, and the end date and time of the valid operation period. The added program 232 which has the expired valid operation period means the added program 232 has the present date and time after the end date and time of the valid operation period when the comparison between the present date and time measured by the clock unit 24 and the valid operation period is made.

In addition, according to the third embodiment, the added program 232 contains deletion necessity information 235 in addition to the added program information 233 and the valid operation period information 234. The deletion necessity information 235 is information of whether to delete the added program 232 from the non-volatile memory 23 after the expiration of the valid operation period or not. When the deletion necessity information 235 of the added program 232 which has the expired valid operation period indicates the necessity of deletion, the processor 21 deletes the added program 232 from the non-volatile memory 23.

### [Operation]

An operation of the digital protective control device 100 according to the third embodiment will be described with reference to the flowchart that is FIG. 7. Since operations in steps S201 to S208, and S210 to S211 illustrated in the flowchart that is FIG. 7 are the same operations in the steps S01 to S08, and S10 to S11 illustrated in the flowchart that is FIG. 3, the description will be omitted.

In step S209, when the present date and time is out of the valid operation period of the added program 232 (step S209: NO), the processor 21 does not execute the added program 232. In addition, when the present date and time is after the end date and time contained in the valid operation period information 234 (step S212: YES), the processor 21 stores the information on the added program 232 in the period expired program information storing area 29 (step S213). Still further, the processor 21 refers to the deletion necessity information 235 of the added program 232, and when the deletion is necessary (step S214: YES), the added program 232 is deleted from the non-volatile memory 23 (step S215), and the process proceeds to step S210.

In step S212, when the present date and time is before the start date and time (step S212: NO), the information is not stored in the period expired program information storing area 29, and the process proceeds to step S210. In the step S214, when the deletion of the added program 232 is unnecessary (step S214: NO), the deletion of the added program 232 is not performed, and the process proceeds to the step S210.

When the information of the added program 232 which has the expired valid operation period is stored in the period expired program information storing area 29, as a contact output of the input-output unit 4, an alert may be output to the external device. The alert may contain information of the added program 232 that has the expired valid operation period. Alternatively, the display unit 5 may display the information of the added program 232 stored in the period expired program information storing area 29. This enables the protective control device to notify the user that the re-writing of the program is incomplete.

Here, although the third embodiment has been described as an adoptive example to the structure of the first embodiment, needless to say, the third embodiment may be adopted to the structure of the second embodiment. In such a case, the added program 232 that has the expired valid operation period means that the added program 232 has the operating time measured by the counter 25 exceeding the total time. When the operating time of the added program 232 measured by the counter 25 exceeds the total time, the processor 21 may store the information of this added program 232 in the period expired program information storing area 29. In addition, when the deletion necessity information 235 indicates the deletion, the stored information may be simply deleted from the non-volatile memory 23.

In addition, although the description has been given of an example case in which the added program 232 contains the deletion necessity information 235, the present disclosure is not limited to this case. For example, a command of whether to delete the added programs 232 in accordance with the kind of the added program 232 or not may be written in the basic program 231. Alternatively, when all the added programs 232 that has the expired valid operation period are deleted, a command to delete the added program 232 that has the expired valid operation period regardless of the kind of the added program 232 may be written in the basic program 231. In these cases, the deletion necessity information 235 of the added program 232 may be omitted.

### [Action and Effect]

(1) In the third embodiment, the processor 21 deletes the added program 232 that has the expired valid operation period from the non-volatile memory 23. By automatically deleting the added program 232 that has the expired valid operation period, it is unnecessary for the manufacturer and the user to carry out a deletion work, enhancing the convenience. In addition, by promptly deleting the added program 232 that has the expired valid operation period, the memory area of the non-volatile memory 23 can be secured.
(2) The non-volatile memory 23 may be provided with the period expired program information storing area 29 that stores the information related to the added program 232 that has the expired valid operation period. This enables, for example, the user to check that the added function is no more available since the valid operation period of the added program 232 is expired, maintaining the reliability of the performance of the digital protective control device 100.
(3) The display unit 5 may display information of the divided program which has the expired valid operation period. This enables the user to know that the valid operation period of the added program 232 has been expired.
(4) The input-output unit 4 may output the information of the added program 232 which has the expired valid operation period to the external device. This enables the protective control device to promptly notify the expiration of the valid operation period of the added program 232.

### [Fourth Embodiment]

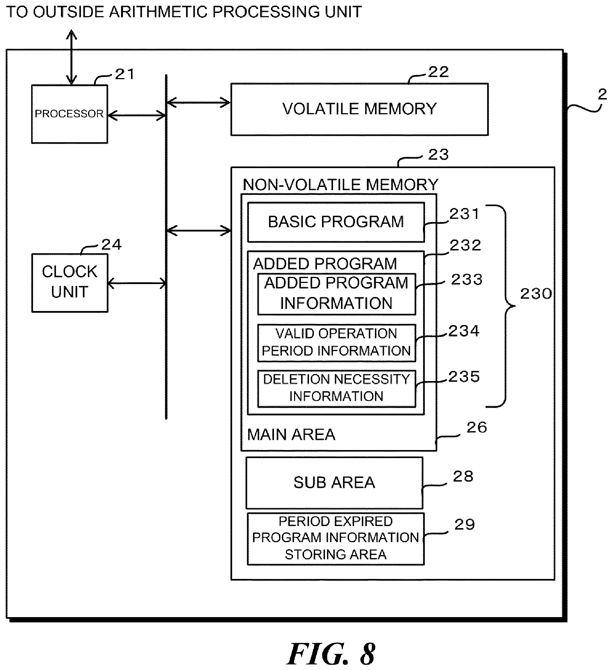

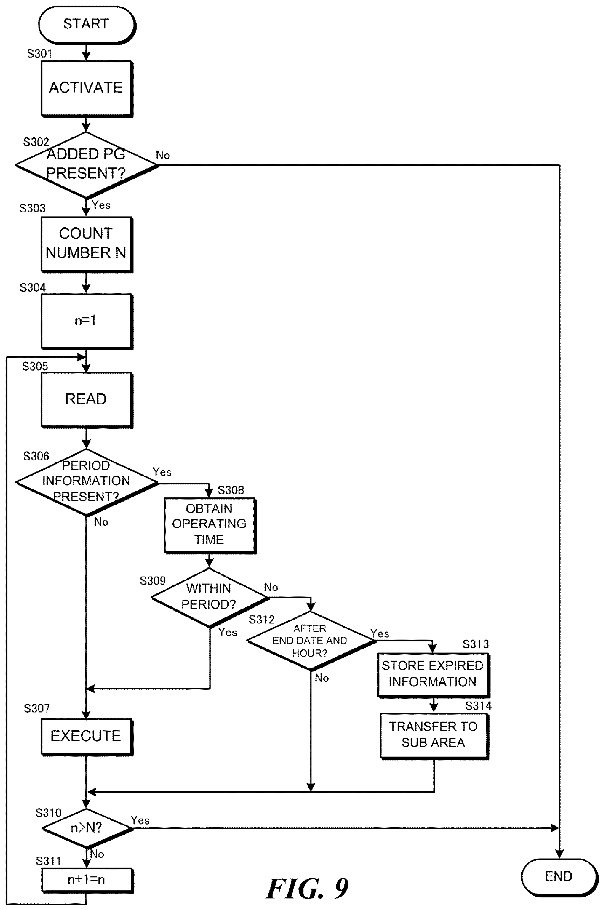

A digital protective control device 100 according to a fourth embodiment will be described with reference to FIGS. 8 and 9. Although the fourth embodiment employs the same structure as that of the first embodiment, as illustrated in FIG. 8, the non-volatile memory 23 of the arithmetic processing unit 2 is provided with a main area 26 and a sub area 28. In addition, as the third embodiment, the period expired program information storing area 29 is provided.

The main area 26 stores the protective control program 230 which includes the basic program 231 and the added program 232. The processor 21 copies the protective control program 230 stored in this main area 26 into the volatile memory 22, reads the copied program, and achieves the protective control function.

Among the added programs 232 stored in the main area 26, the added program that has the expired valid operation period is transferred and stored in the sub area 28. The added program 232 which has the expired valid operation period means the added program 232 that has the present date and time after the end date and time of the valid operation period when the comparison between the present date and time measured by the clock unit 24 and the valid operation period is made.

In the period expired program information storing area 29 the information of the added program 232 which has the expired valid operation period is stored, as the third embodiment.

### [Operation]

An operation of the digital protective control device 100 according to the fourth embodiment will be described with reference to the flowchart that is FIG. 9. Since the operations in steps S301 to S308, and S310 to S311 illustrated in the flowchart that is FIG. 9 are the same as those in the steps S01 to S08, and S10 to S11 illustrated in the flowchart that is FIG. 3, the description will be omitted.

In step S309, when the present date and time is out of the valid operation period of the added program 232 (step S309: NO), the processor 21 does not execute this added program 232. In addition, when the present date and time is after the end date and time contained in valid operation period information 234 (step S312: YES), the processor 21 stores the information of the added program 232 in the period expired program information storing area 29 (step S313). Still further, the processor 21 moves this added program 232 to the sub area 28 (step S314). More specifically, the added program 232 is copied into the sub area 28, and is deleted from the main area 26. Subsequently, the process proceeds to step S310.

When the present date and time is before the start date and time in the step S312 (step S312: NO), the information is not stored in the period expired program information storing area 29, and the process proceeds to the step S310.

Like the third embodiment, when the information of the added program 232 which has the expired valid operation period is stored in the period expired program information storing area 29, as a contact output by the input-output unit 4, an alert to the external device may be output. The alert may contain information of the added program 232 that has the expired valid operation period. Alternatively, the display unit 5 may display the information of the added program 232 stored in the period expired program information storing area 29. This enables the protective control device to notify the user that the re-writing of the program is incomplete.

Here, although the fourth embodiment has been described as an adoptive example to the structure of the first embodiment, needless to say, this embodiment may be adopted to the structure of the second embodiment. In this case, the added program 232 that has the expired valid operation period means that the added program 232 has the operating time measured by the counter 25 exceeding the total time. When the operating time of the added program 232 measured by the counter 25 exceeds the total time, the processor 21 may store the information of the added program 232 in the period expired program information storing area 29. In addition, the added program 232 is copied from the main area 26 of the non-volatile memory 23 to the sub area 28 of the non-volatile memory 23, and is deleted from the main area 26.

### [Action and Effect]

(1) In the fourth embodiment, the non-volatile memory 23 is provided with the sub area 28 that stores the divided program which has the expired valid operation period. Accordingly, for example, when the user decides the formal adaptation of the added function after the expiration of the valid operation period, the user may simply return the program transferred to the sub area 28 to the main area 26, reducing a work and cost of re-installation of the added program 232.
(2) The non-volatile memory 23 may be provided with the period expired program information storing area 29 that stores the information related to the added program 232 which has the expired valid operation period. This enables, for example, the user to check that the added function is not available due to the expiration of the valid operation period of the added program 232, maintaining the reliability for the performance of the digital protective control device 100. In addition, the user can promptly decide whether to formally adopt the added program 232 or not.
(3) The display unit 5 may display information of the divided program which has the expired valid operation period. This enables the user to know that the valid operation period of the added program 232 has been expired, and to consider whether to formally adopt the added program 232 or not.
(4) The input-output unit 4 may output the information of the added program 232 which has the expired valid operation period to the external device. This enables the protective control device to promptly notify the expiration of the valid operation period of the added program 232.

### [Fifth Embodiment]

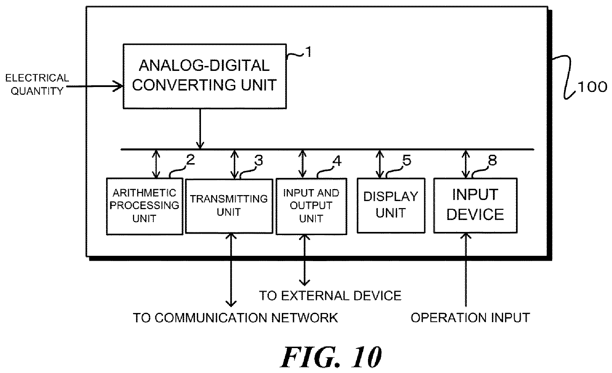

A digital protective control device 100 according to a fifth embodiment will be described with reference to FIG. 10. The fifth embodiment includes an input device 8 that accepts an external operation input to the arithmetic processing unit 2. The input device 8 is, for example, a mouse, a keyboard, etc. The processor 21 receives the operation input to change or delete the information related to the valid operation period of the added program 232 via the input device 8. When, for example, the user decides to formally adopt the added program 232 during the trial period of the added program 232, by giving an operation to delete the valid operation period of the added program 232, the user can keep utilizing the added program 232 even after the valid operation period has expired.

In addition, when the user desires to keep utilizing the added program 232 for a certain time period after the expiration of the valid operation period, and when the utilization period of the added program 232 is to be set to a certain time period after the formal adoptation, by giving the operation to change the valid operation period of the added program 232, the user can keep utilizing the added program 232 until the predetermined time period elapses.

In addition, in order to prevent a fraudulent change of the valid operation period, the operation to change or to delete the valid operation period may be accepted after an authentication like password inputting.

Still further, the change or deletion of the information related to the valid operation period may be performed based on an operation command from the external device like a remote monitoring control device, etc. The operation command from the external device like the remote monitoring control device, etc., is received by the transmitting unit 3 via the communication network. The operation command may include the identification information of the added program 232 to be deleted or changed. In addition, when the valid operation period is to be changed, the information of the end date and time after the change may be contained. The processor 21 may change or delete the information related to the valid operation period in accordance with the received operation command.

### [Other Embodiments]

Although several embodiments of the present disclosure have been described, those embodiments are merely presented as examples, and are not intended to limit the scope of the present disclosure. Those embodiments can be carried out in other various forms, and various omissions, replacements and modifications can be made thereto without departing from the scope of the present disclosure. Such embodiments and modified forms are within the scope of the present disclosure, and are also within the scope of the invention as recited in the appended claims and the equivalent range thereto.

For example, in the above embodiments, the description has been given of an example case in which, among the divided programs constructing the protective control program 230, the added program 232 contains the information related to the valid operation period, but the basic program 231 may contain the valid operation period information 234.

### REFERENCE SIGNS LIST

- 1: Analog-digital converting unit
- 2: Arithmetic processing unit
- 3: Transmitting unit
- 4: Input-output unit
- 5: Display unit
- 8: Input device
- 21: Processor
- 22: Volatile memory
- 23: Non-volatile memory
- 24: Clock unit
- 25: Counter
- 26: Main area
- 28: Sub area
- 29: Period expired program information storing area
- 100: Digital protective control device
- 230: Protective control program
- 231: Basic program
- 232: Added program
- 233: Added program information
- 234: Valid operation period information
- 235: Deletion necessity information

## Claims

1. A digital protective control device that protects a power system, the digital protective control device comprising:
an analog-digital converting unit that converts an electrical quantity obtained from the power system into digital data;
a memory unit that stores a protective control program which achieves a function of the digital protective control device; and
a processor that executes the protective control program stored in the memory unit, and performs arithmetic processing on the digital data output by the analog-digital converting unit, wherein:
the protective control program includes a plurality of divided programs divided in accordance with the function of the digital protective control device, and each of the divided programs includes information related to a valid operation period thereof; and
the processor executes the divided program within the valid operation period.

2. The digital protective control device according to claim 1, further comprising a clock unit that counts a date and time, wherein:
the information related to the valid operation period of the divided program contains a start date and time of the valid operation period of the divided program, or an end date and time thereof; and
the processor compares the start date and time or the end date and time with the date and time measured by the clock unit, and does not execute the divided program when the measured date and time is before the start date and time or after the end date and time.

3. The digital protective control device according to claim 1, further comprising a counter that counts an operating time of the protective control program, wherein:
the information related to the valid operation period of the divided program includes information of a total time at which the divided program is operable; and
the processor compares the total time with the operating time of the divided program counted by the counter, and does not execute the divided program when the operating time exceeds the total time.

4. The digital protective control device according to any one of claims 1 to 3, wherein the processor deletes the divided program that has the expired valid operation period from the memory unit.

5. The digital protective control device according to any one of claims 1 to 3, wherein the memory unit comprises a sub area that stores the divided program which has the expired valid operation period.

6. The digital protective control device according to any one of claims 1 to 5, wherein the memory unit includes a period expired program information storing area that stores the information related to the divided program which has the expired valid operation period.

7. The digital protective control device according to any one of claims 1 to 6, further comprising a display unit that displays information of the divided program which has the expired valid operation period.

8. The digital protective control device according to any one of claims 1 to 7, further comprising an output unit that outputs the information of the divided program which has the expired valid operation period to an external device.

9. The digital protective control device according to any one of claims 1 to 8, further comprising an input device that accepts an operation input to change or to delete the information related the valid operation period of the divided program,
wherein the processor changes or deletes the information related the valid operation period of the divided program stored in the memory unit in accordance with the operation input.

10. The digital protective control device according to any one of claims 1 to 9, further comprising a transmitting unit that receives a command to change or to delete the information related to the valid operation period of the divided program,
wherein the processor changes or deletes the information related to the valid operation period of the divided program stored in the memory unit in accordance with the change or delete command received by the transmitting unit.
